# EUROPÄISCHE PATENTSCHRIFT

(11) **EP 1 881 911 B1**
(45) Veröffentlichungstag und Bekanntmachung des Hinweises auf die Patenterteilung: **11.02.2009**
(21) Anmeldenummer: 06829473.5
(22) Anmeldetag: 09.12.2006
(51) Int. Cl.: B60N 2/225, B60N 2/44, B60N 2/02, F16H 1/32

(54) **GETRIEBESTUFE EINES STELLANTRIEBS**
GEAR STAGE OF AN ACTUATING DRIVE
RAPPORT DE TRANSMISSION D UN SERVOMOTEUR

(30) Priorität: 21.12.2005 DE 102005061188
(43) Veröffentlichungstag der Anmeldung: 30.01.2008
(73) Patentinhaber: KEIPER GmbH & Co. KG, 67657 Kaiserslautern (DE)
(72) Erfinder: SCHÜLER, Rolf, 42579 Heiligenhaus (DE); KALMUS, Karsten, 44799 Bochum (DE)
(74) Vertreter: Patentanwälte Hosenthien-Held und Dr. Held
(86) Internationale Anmeldenummer: PCT/EP2006/011881
(87) Internationale Veröffentlichungsnummer: WO 2007/079867

(56) Entgegenhaltungen:
- WO-A-00/39483
- WO-A-96/05451
- WO-A-96/17187

## Beschreibung

Die Erfindung betrifft eine Getriebestufe eines Stellantriebs mit den Merkmalen des Oberbegriffs des Anspruches 1.

Eine Getriebestufe dieser Art ist in der WO 96/05451 A1 offenbart. Ähnliche Getriebestufen zeigen die WO 00/39483 A1 und die WO 9617187 A1. Aus der DE 44 36 101 A1 ist eine Getriebestufe bekannt, die in einem Beschlag mit zwei gezahnten, einander kämmenden Gelenkteilen verwirklicht ist. Eines der beiden Gelenkteile bildet ein feststehendes Lager, während das andere Gelenkteil als Taumelkörper dient, in einem einzigen Berührpunkt am erstgenannten Gelenkteil anliegt und im Antriebsfall eine Abwälzbewegung durchführt, welches sich als Drehbewegung um eine zur Achse des Lagers parallele und diese umkreisende Achse darstellt.

Der Erfindung liegt die Aufgabe zu Grunde, eine alternative Getriebestufe der eingangs genannten Art zu schaffen. Diese Aufgabe wird erfindungsgemäß durch eine Getriebestufe mit den Merkmalen des Anspruches 1 gelöst. Vorteilhafte Ausgestaltungen sind Gegenstand der Unteransprüche.

Indem die Achse des Taumelkörpers in einem Winkel relativ zur Achse des Lagers schräg geneigt ist, kann ein anderes Verhältnis zwischen dem in radialer Richtung und in axialer Richtung beanspruchten Bauraum eingestellt werden. Erfindungsgemäß liegt der Taumelkörper in zwei Berührpunkten am Lager an. Mit dieser - gegenüber dem Stand der Technik - doppelt so großen Anzahl von Berührpunkten mit diametral entgegenwirkenden Normalkräften werden symmetrische Kräfteverhältnisse erzeugt. Gegenüber einer einfachen Verdoppelung der Bauteile der Getriebestufe, Verdrehung um 180° und axial versetzten Anordnung werden deutlich weniger Bauteile benötigt. Für eine einfache Kinematik schneiden sich die beiden Achsen in einem Punkt. Weitere Vereinfachungen der geometrischen Verhältnisse werden beispielsweise erreicht, indem der Taumelkörper und das Lager - beide zumindest abschnittsweise - zylindersymmetrisch mit unterschiedlichen Durchmessern ausgebildet sind. Taumelkörper und Lager können als Reibradgetriebe oder mittels einer Verzahnung zusammenwirken.

Vorzugsweise erfolgt der Abtrieb konzentrisch zur Achse des Lagers. Hierfür weist der Taumelkörper eine kegelige Aufnahme für den Abtrieb auf, wobei als Abtrieb vorzugsweise eine die Aufnahme berührende Welle vorgesehen ist. Der Öffnungswinkel der Aufnahme ist entsprechend der Neigung des Taumelkörpers gewählt, so dass der Abtrieb sich um die Achse des Lagers drehen kann. Ein an der engsten Stelle der Aufnahme vorgesehener Kontaktkreis mit einem Mittelpunkt ist dann ständig in Kontakt mit dem Abtrieb. Dieser Mittelpunkt, welcher vorzugsweise zugleich der Schnittpunkt der Achsen des Taumelkörpers und des Lagers ist, kann beispielsweise in der Mitte zwischen den Berührpunkten angeordnet sein, was die Bildung symmetrischer Kraftverhältnisse erleichert.

Der Antrieb des Taumelkörpers kann beispielsweise mittels eines Wälzexzenters erfolgen, welcher durch eine umlaufende Wälzexzenterkugel erzeugt wird. Die Kugelform erlaubt wieder einen Ausgleich der Neigung des Taumelkörpers, womit ein zur Achse des Lagers konzentrischer Antrieb möglich ist. Es ist aber auch möglich, dass ein Motor des Stellantriebs mit der Getriebestufe so eng integriert ist, dass der Taumelkörper bereits Rotormagnete des Motors trägt, während am Lager oder an einem das Lager aufweisenden Gehäuse ein mit den Rotormagneten zusammenwirkender Stator angeordnet ist, der vorzugsweise elektronisch kommutiert ist. Der Ausgleich der Auswirkungen der Neigung des Taumelkörpers erfolgt dann beispielsweise durch die lokal unterschiedliche, insbesondere axial unterschiedliche Kommutierung des Stators.

Der mit der erfindungsgemäßen Getriebestufe versehene Stellantrieb wird bei einem Fahrzeugsitz bevorzugt - mit einem lastaufnehmenden Getriebe eines Beschlags kombiniert - als Lehnenneigungseinsteller eingesetzt, könnte aber auch anderweitig in einem Fahrzeugsitz verwendet werden.

Im folgenden ist die Erfindung anhand eines in der Zeichnung dargestellten Ausführungsbeispiels mit einer Abwandlung näher erläutert. Es zeigen
- Fig. 1: eine Prinzipdarstellung des Ausführungsbeispiels,
- Fig. 2: einen Schnitt entlang der Linie II-II in Fig. 1,
- Fig. 3: einen Schnitt entlang der Linie III-III in Fig. 1,
- Fig. 4: eine schematische Darstellung eines Fahrzeugsitzes,
- Fig. 5: eine Darstellung des Ausführungsbeispiels mit einem Antrieb,
- Fig. 6: eine teilweise schematisierte Darstellung eines Stellantriebs unter Verwendung des Ausführungsbeispiels,
- Fig. 7: eine Abwandlung des Ausführungsbeispiels, und
- Fig. 8: eine Verzahnung zwischen dem Taumelkörper und dem nur teilweise dargestellten Lager.

Eine Getriebestufe 1 eines Stellantriebes 3 in einem Fahrzeugsitz 4 eines Kraftfahrzeuges weist ein feststehendes (d.h. mit der Struktur des Fahrzeugsitzes 4 verbundenes) Gehäuse 8 und einen Taumelkörper 11 auf, welcher vom Gehäuse 8 wenigstens teilweise umschlossenen ist und innerhalb desselben in einem Lager 12 drehbar gelagert ist.

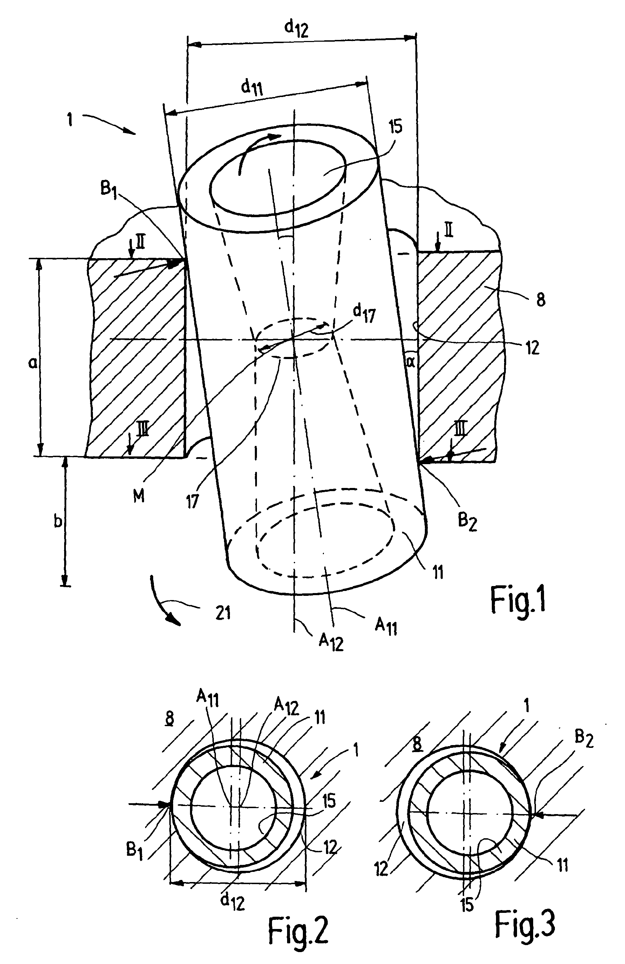

Das Funktionsprinzip der Getriebestufe 1 ist aus Fig. 1 ersichtlich. Der Taumelkörper 11 ist - zumindest abschnittsweise - zylindersymmetrisch, wobei der (Außen-) Durchmesser d₁₁ dieses Zylinders kleiner ist als der (Innen-)Durchmesser d₁₂ des vorliegend ebenfalls zylindersymmetrischen Lagers 12. Die Symmetrien des Taumelkörpers 11 und des Lagers 12 definieren jeweils eine Achse A₁₁ bzw. A₁₂. Die Achse A₁₁ des Taumelkörpers 11 ist in einem von Null verschiedenen Winkel α relativ zur Achse A₁₂ des Lagers 12 geneigt, d.h. schräg dazu. Vorliegend ist das Lager 12 entlang seiner Achse A₁₂ nur über eine Länge a hinweg ausgebildet, wobei der über das Lager 12 überstehende Taumelkörper 11 an einem ersten Berührpunkt B₁ und einem diametral entgegen gelegenen zweiten Berührpunkt B₂ am Rand des Lagers 12 anliegt, und ansonsten in das Gehäuse 8 ragt oder über dieses übersteht, wobei d₁₂= d₁₁ / cos α + a tan α gilt.

Der Taumelkörper 11 wird an einem über das Lager 12 überstehenden Ende angetrieben durch eine Antriebskraft, welche auf der Außenseite des Taumelkörpers 11 angreift, womit auch die einander entgegengesetzt ausgerichteten Normal- oder Radialkräfte in den Berührpunkten B₁, B₂ erzeugt werden, und eine umlaufende Richtung aufweist, womit die Berührpunkte B₁, B₂ umlaufen und damit der Taumelkörper 11 sich dreht, genauer gesagt sich am Lager 12 abwälzt. Die Achse A₁₁ des Taumelkörpers 11 bewegt sich dabei auf einer Kegelfläche um die Achse A₁₂ des Lagers 12. In einer Ebene senkrecht zur Achse A₁₂ des Lagers 12 führt der Taumelkörper 11 als Abwälzbewegung eine Drehbewegung mit überlagerter Taumelbewegung aus, d.h. mit einer sich drehenden Exzentrizität (d₁₂ - d₁₁/cos α) / 2, also bei kleinem Neigungswinkel α näherungsweise (d₁₂ - d₁₁) / 2. Diese Exzentrizität ist klein gegenüber den Durchmessern d₁₁ und d₁₂, vorzugsweise maximal im Bereich weniger Prozente, d.h. in der Regel kleiner als 0,5 mm.

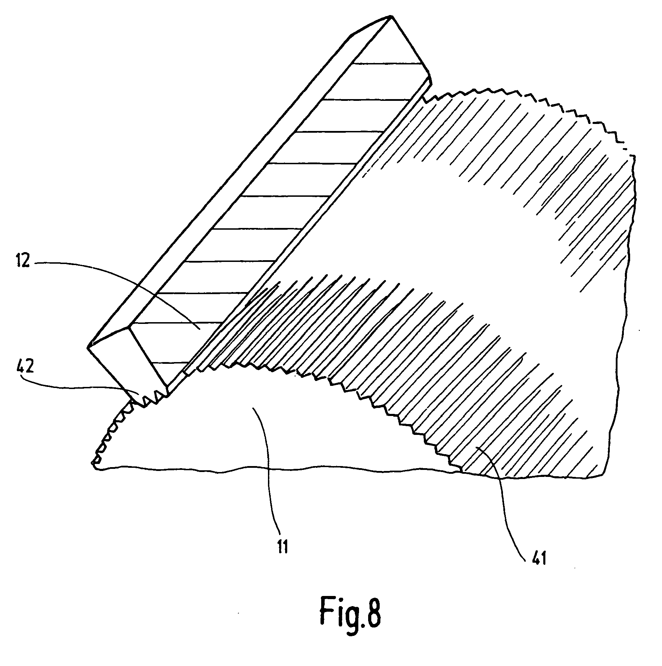

Um zwischen Taumelkörper 11 und Lager 12 in den Berührpunkten B₁, B₂ mit den Normalkräften eine möglichst hohe Reibung für die Abwälzbewegung zu erzeugen, sind die Materialpaarungen geeignet gewählt, gegebenenfalls Oberflächenbeschichtungen vorgesehen und/oder geeignete Kontaktgeometrien realisiert, beispielsweise Ringe in V-förmigen Ringnuten oder eine Verzahnung, wie sie in der später genauer beschriebenen Fig. 8 dargestellt ist. Die Radialkräfte in den Berührpunkten B₁, B₂ steigen außerdem, wenn der Angriffsbereich der Antriebskraft in einem gegenüber der Länge a des Lagers 12 großen Abstand b zum Lager 12 erfolgt.

Der Taumelkörper 11 ist mit einer doppel-kegeligen Innenbohrung, im folgenden als Aufnahme 15 bezeichnet, versehen, deren Öffnungswinkel 2α beträgt. Die Aufnahme weist an ihrer engsten Stelle einen Querschnitt in Form eines Kontaktkreises 17 mit einem Mittelpunkt M und einem Durchmesser d₁₇ auf. Der Mittelpunkt M ist zugleich der Schnittpunkt der Achsen A₁₁, A₁₂. Der Taumelkörper 11 ist in Fig. 1 so angeordnet, dass der Mittelpunkt M in der Mitte zwischen den Berührpunkten B₁, B₂ zu liegen kommt, also entlang der Achse A₁₂ des Lagers 12 bei a/2, was den Vorteil einer Lagerung im Schwerpunkt und damit Reduzierung von Massenkräften hat.

Als Abtrieb wird eine Welle mit dem Kontaktkreis 17 als Querschnitt in den Taumelkörper 11 eingeführt, welche dann an der Wand der Aufnahme 15 berührend anliegt und bei einer Drehung des Taumelkörpers 11 mitgenommen wird. Da der Öffnungswinkel der Aufnahme 15 die Neigung der Achse A₁₁ des Taumelkörpers 11 ausgleicht und da die lokale Exzentrizität im Mittelpunkt M Null ist (und in der Ebene des Kontaktkreises 17 sehr klein ist), kann sich die Welle um die Achse A₁₂ des Lagers 12 drehen, ohne dass taumelnde Abweichungen von einer Drehbewegung merklich sind. Das Übersetzungsverhältnis zwischen der (kleinen) Drehzahl dieser Welle und der (großen) Drehzahl der Antriebskraft beträgt näherungsweise d₁₂ (d₁₂ - d₁₁). Zur Verbesserung des Kontaktes zwischen Taumelkörper 11 und Welle kann am Kontaktkreis 17 eine spezielle Kontaktgeometrie, beispielsweise ein Bogenzahnprofil, vorgesehen sein.

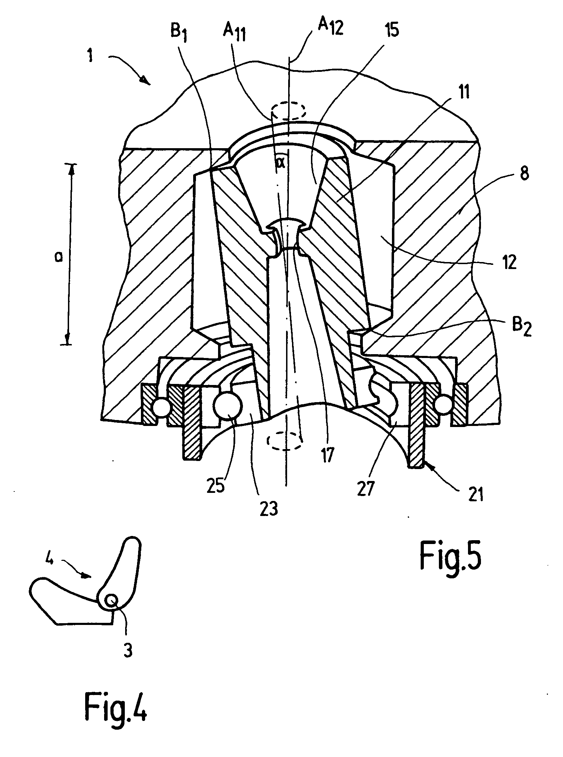

Beispielhaft ist in Fig. 5 dargestellt, wie die Antriebskraft für die erfindungsgemäße Getriebestufe 1 mittels eines geeigneten Antriebs 21 eingeleitet wird. Das Lager 12 ist gegenüber Fig. 1 ergänzt um schrägwandige Endabschnitte, d.h. Kegelstümpfe, auf denen der Taumelkörper 11 berührend anliegt. Der Taumelkörper 11 ist an einem Ende mit einem zylindrischen Abschnitt von geringerem Durchmesser axial verlängert, auf welchem der Taumelkörper 11 einen inneren Lagerring 23 zur hälftigen Lagerung einer einzelnen Wälzexzenterkugel 25 trägt, welche ebenfalls hälftig in einem äußeren Lagerring 27 am Antrieb 21 gelagert ist. Der Antrieb 21 wiederum ist im Gehäuse 8 gelagert, beispielsweise mittels eines Kugellagers. Die Wälzexzenterkugel 25 bildet einen Wälzexzenter und verspannt dabei den Taumelkörper 11 und den Antrieb 21 so zueinander, dass eine Drehung des Antriebs 21 mittels umlaufendem Abrollen der Wälzexzenterkugel 25 die gewünschte Abwälzbewegung des Taumelkörpers 11 am Lager 12 bewirkt.

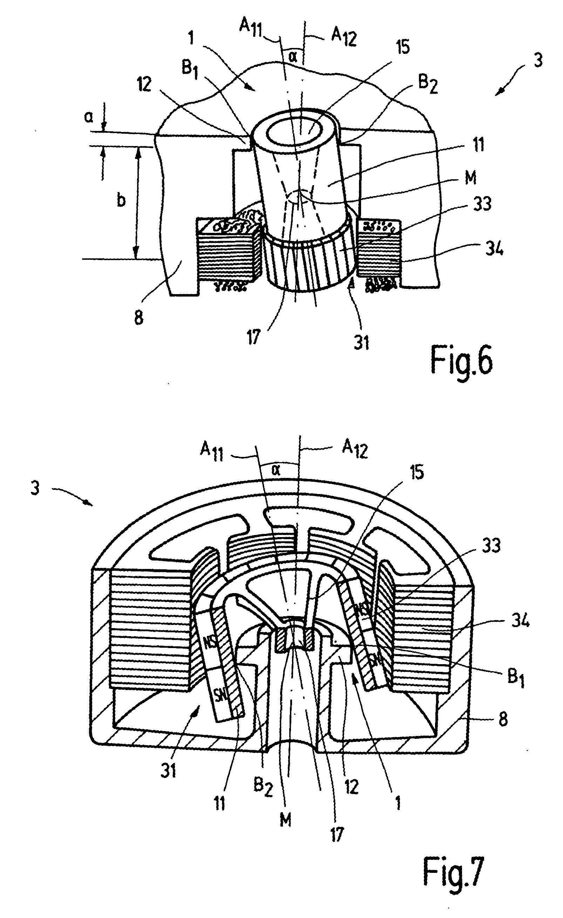

Ein Stellantrieb 3, in welchen die erfindungsgemäße Getriebestufe 1 und ein Motor 31 integriert sind, ist in Fig. 6 dargestellt, wobei die bislang beschriebenen Bestandteile der Getriebestufe 1 einschließlich der Anlage des Taumelkörpers 11 am Lager 12 lediglich schematisch dargestellt sind. Zur Bildung des Motors 31 weist der Taumelkörper 11 an einem Ende in Umfangsrichtung gleichmäßig verteilt mehrere Rotormagnete 33 auf, stellt also den Rotor dar, während am Gehäuse 8 - in der Nachbarschaft der Rotormagnete 33 - ein Stator 34 angeordnet ist. Die umlaufenden Radialkräfte in den Berührpunkten B₁, B₂ und damit das Kippmoment für den Taumelkörper 11 werden vom Motor 31 elektromagnetisch erzeugt. Der mit den Rotormagneten 33 zusammenwirkende Stator 34 ist vorliegend elektronisch kommutiert. Damit ist bei fehlendem Neigungsausgleich im Antrieb 21 prinzipiell auch eine axial unterschiedliche Kommutierung möglich, insbesondere in Verbindung mit axial zu einander versetzten Ebenen unterscheidlicher radialer Magnetisierung der Rotormagnete 33. Diese axial unterschiedliche Kommutierung ist auf die gewünschte Neigung des Taumelkörpers 11 abgestimmt und gleicht so die Auswirkung von dessen Neigung beim Betrieb des Motors 31 aus.

Eine Abwandlung des Ausführungsbeispiels, welche - soweit nicht abweichend beschrieben - mit dem Ausführungsbeispiel übereinstimmt, ist in Fig. 7 dargestellt. Der Taumelkörper 11 umschließt nun das Lager 12, d.h. d₁₁ > d₁₂, und liegt in einem hohlzylindrischen Abschnitt in den Berührpunkten B₁, B₂ berührend am scheibenförmig ausgebildeten Lager 12 an. Der Taumelkörper 11 weist auch eine einfachkegelige Materialeinstülpung auf, deren Innenseite die Aufnahme 15 einschließlich des Kontaktkreises 17 bildet, welche mit der als Abtrieb dienenden Welle zusammenwirkt. Die innere Lagerung des Taumelkörpers 11 ermöglicht es, die Rotormagnete 33 über die Außenseite des Taumelkörpers 11 zu verteilen, womit der Taumelkörper 11 geringer und letztendlich der gesamte Stellantrieb 3 axial kürzer baut.

Sowohl beim Ausführungsbeispiel als auch bei der Abwandlung wirken der Taumelkörper 11 und das Lager 12 in den Berührpunkten B₁ und B₂ im einfachsten Fall als Reibradgetriebe zusammen, d.h. mit einer berührenden Anlage glatter Flächen. Wie bereits kurz erwähnt, sind auch geeignete Kontaktgeometrien möglich, vorzugsweise eine Verzahnung zwischen Taumelkörper 11 und Lager 12. Wie in Fig. 8 dargestellt, weist der Taumelkörper 11 eine Außenverzahnung 41 und das - nur in einem kleinen Winkelbereich dargestellte - Lager 12 eine Innenverzahnung 42 auf, welche miteinander kämmen. In der Abwandlung von Fig. 7 würden umgekehrte Verhältnisse vorliegen. Bei den angegebenen Formeln ist bei d₁₁ und d₁₂ zusätzlich die Differenz der Wälzkreise von Außenverzahnung 41 und Innenverzahnung 42 zu berücksichtigen. Daraus ergibt sich auch eine Mindestexzentrizität, um einen ausreichenden Zahneingriff zu gewährleisten.

Das Verhältnis der Durchmesser der Wälzkreise von Außenverzahnung 41 und Innenverzahnung 42 muss dem Verhältnis der ganzzahligen Zähnezahlen von Außenverzahnung 41 und Innenverzahnung 42 entsprechen. Das Übersetzungsverhältnis ist das Verhältnis der Zähnezahl der Außenverzahnung 41 zur Differenz der Zähnezahlen von Innenverzahnung 42 und Außenverzahnung 41, also besonders groß, wenn die Differenz der Zähnezahlen eins beträgt.

Die Innenverzahnung 42 ist beispielsweise über die gesamte Länge a des Lagers 12 gleichmäßig ausgebildet, insbesondere mit konstanter Zahnhöhe. Bei der Außenverzahnung 41 sind die Zahnhöhen dann an den Neigungswinkel α angepasst. Die geometrische Erzeugung der Außenverzahnung 41 erfolgt durch kinematisches Abrollen der Wälzkreise von Außenverzahnung 41 und Innenverzahnung 42. Diese Bewegung erzeugt einen Hüllkörper, welcher als Abzugskörper für die Außenverzahnung 41 dient. Die Innenverzahnung 42 dient quasi als Werkzeug zur Herstellung der Außenverzahnung 41. Ausgehend von der Ebene mit dem Mittelpunkt M, in welcher die Zahnhöhe null ist, also Kopfkreis und Fußkreis der Außenverzahnung 41 zusammenfallen und ungefähr d₁₁ betragen, wird der Durchmesser des Fußkreises der Außenverzahnung 41 in beide Richtung der Achse A₁₁ immer kleiner (und der Kopfkreis größer), d.h. die Zahnhöhe als Differenz von Kopfkreis und Fußkreis wächst an. Die beiden Teilbereich der Außenverzahnung 41 sind nicht spiegelsymmetrisch zueinander ausgebildet, sondern wegen der bevorzugten Differenz der Zähnezahlen von Innenverzahnung 42 und Außenverzahnung 41 von eins um eine halbe Zahnbreite in Umfangsrichtung der Achse A₁₁ zueinander versetzt angeordnet.

Die beiden Wälzkreise der Außenverzahnung 41, die jeweils außerhalb der Außenverzahnung 41 liegen (d.h. einen größeren Durchmesser als der Kopfkreis haben), sind gegenüber den Wälzkreisen der Innenverzahnung 42 geneigt, weshalb die Mindestexzentrizität im Vergleich zu Verzahnungen mit axial konstanten Zahnhöhen geringer ist. Im Bereich der Berührpunkte B₁ und B₂ steht eine vergleichsweise große Zahnflanke zur Verfügung, weshalb sich der insgesamt benötigte radiale Bauraum reduziert.

### Bezugszeichenliste

- 1: Getriebestufe
- 3: Stellantrieb
- 4: Fahrzeugsitz
- 8: Gehäuse
- 11: Taumelkörper
- 12: Lager
- 15: Aufnahme
- 17: Kontaktkreis
- 21: Antrieb
- 23: innerer Lagerring
- 25: Wälzexzenterkugel
- 27: äußerer Lagerring
- 31: Motor
- 33: Rotormagnet
- 34: Stator
- 41: Außenverzahnung
- 42: Innenverzahnung
- α: Neigungswinkel der Achsen relativ zueinander
- a: Länge des Lagers
- b: Abstand
- A₁₁: Achse des Taumelkörpers
- A₁₂: Achse des Lagers
- B₁: erster Berührpunkt
- B₂: zweiter Berührpunkt
- d₁₁: Durchmesser des Taumelkörpers
- d₁₂: Durchmesser des Lagers
- d₁₇: Durchmesser des Kontaktkreises
- M: Mittelpunkt

## Patentansprüche

1. Getriebestufe eines Stellantriebs, insbesondere für einen Fahrzeugsitz, mit einem Lager (12), welches eine Achse (A₁₂) definiert, und einem vom Lager (12) gelagerten und um eine weitere Achse (A₁₁) drehbaren Taumelkörper (11), welcher bei Drehung eines Antriebs (21) eine Abwälzbewegung am Lager (12) um dessen Achse (A₁₂) durchführt, wobei die Achse (A₁₁) des Taumelkörpers (11) in einem Winkel (α) relativ zur Achse (A₁₂) des Lagers (12) schräg geneigt ist, **dadurch gekennzeichnet, dass** der Taumelkörper (11) in zwei diametral entgegen gelegenen Berührpunkten (B₁, B₂) am Lager (12) anliegt.

2. Getriebestufe nach Anspruch 1, **dadurch gekennzeichnet, dass** der Taumelkörper (11) und das Lager (12) - beide zumindest abschnittsweise - zylindersymmetrisch mit unterschiedlichen Durchmessern (d₁₁, d₁₂) ausgebildet sind.

3. Getriebestufe nach Anspruch 2, **dadurch gekennzeichnet, dass** die Exzentrizität der Lagerung des Taumelkörpers (11) klein gegenüber den Durchmessern (d₁₁, d₁₂) von Taumelkörper (11) und Lager (12) ist, insbesondere maximal wenige Prozent davon beträgt.

4. Getriebestufe nach einem der vorhergehenden Ansprüche, **dadurch gekennzeichnet, dass** der Taumelkörper (11) und das Lager (12) als Reibradgetriebe oder mittels einer Verzahnung zusammenwirken, die eine Außenverzahnung (41) und eine Innenverzahnung (42) umfasst, welche miteinander kämmen.

5. Getriebestufe nach einem der vorhergehenden Ansprüche, **dadurch gekennzeichnet, dass** die Achsen (A₁₁, A₁₂) sich in einem Mittelpunkt (M) schneiden.

6. Getriebestufe nach Anspruch 5, **dadurch gekennzeichnet, dass** der Mittelpunkt (M) in der Mitte zwischen den Berührpunkten (B₁, B₂) angeordnet ist.

7. Getriebestufe nach einem der vorhergehenden Ansprüche, **dadurch gekennzeichnet, dass** der Taumelkörper (11) eine kegelige Aufnahme (15) für einen Abtrieb aufweist.

8. Getriebestufe nach Anspruch 5 und 7, **dadurch gekennzeichnet dass** die Aufnahme (15) an ihrer engsten Stelle einen Kontaktkreis (17) aufweist, dessen Mittelpunkt (M) der Schnittpunkt der Achsen (A₁₁, A₁₂) ist.

9. Getriebestufe nach Anspruch 8, **dadurch gekennzeichnet, dass** als Abtrieb eine Welle vorgesehen ist, welche in der Aufnahme (15) berührend anliegt und einen dem Kontaktkreis (17) entsprechenden Querschnitt aufweist.

10. Getriebestufe nach einem der vorhergehenden Ansprüche, **dadurch gekennzeichnet, dass** der Antrieb (21) einen den Taumelkörper (11) bewegenden Wälzexzenter aufweist, welcher durch eine umlaufende Wälzexzenterkugel (25) erzeugt wird.

11. Getriebestufe nach einem der vorhergehenden Ansprüche, **dadurch gekennzeichnet, dass** die Getriebestufe (1) mit einem Motor (31) in den Stellantrieb (3) integriert ist.

12. Getriebestufe nach Anspruch 11, **dadurch gekennzeichnet, dass** der Taumelkörper (11) Rotormagnete (33) des Motors (31) trägt, während an einem das Lager (12) aufweisenden Gehäuse (8) ein mit den Rotormagneten (33) zusammenwirkender Stator (34) angeordnet ist.

13. Stellantrieb (3) mit einer Getriebestufe (1) nach einem der vorhergehenden Ansprüche.

14. Fahrzeugsitz, insbesondere Kraftfahrzeugsitz, mit einem Stellantrieb (3) nach Anspruch 13.

## Claims

1. Gear stage of an actuating drive, in particular for a vehicle seat, with a bearing (12) which defines an axis (A₁₂) and an oscillatory body (11) which is mounted by the bearing (12), is rotatable about a further axis (A₁₁) and executes a rolling movement on the bearing (12) around the axis (A₁₂) thereof upon rotation of a drive (21), wherein the axis (A₁₁) of the oscillatory body (11) is inclined obliquely at an angle (α) relative to the axis (A₁₂) of the bearing (12), **characterised in that** the oscillatory body (11) rests against the bearing (12) at two diametrically opposite contact points (B₁, B₂).

2. Gear stage according to Claim 1, **characterised in that** the oscillatory body (11) and the bearing (12) are formed - both at least in sections - in a cylindrically symmetrical manner with different diameters (d₁₁, d₁₂).

3. Gear stage according to Claim 2, **characterised in that** the eccentricity of the mounting of the oscillatory body (11) is small in comparison with the diameters (d₁₁, d₁₂) of the oscillatory body (11) and the bearing (12), in particular being at most a few per cent thereof.

4. Gear stage according to any one of the preceding Claims, **characterised in that** the oscillatory body (11) and the bearing (5) co-operate as friction gears or by means of a tooth system which comprises an external tooth system (41) and an internal tooth system (42) which mesh with one another.

5. Gear stage according to any one of the preceding Claims, **characterised in that** the axes (A₁₁, A₁₂) intersect at a centre point (M).

6. Gear stage according to Claim 5, **characterised in that** the centre point (M) is disposed in the centre between the contact points (B₁, B₂).

7. Gear stage according to any one of the preceding Claims, **characterised in that** the oscillatory body (11) has a conical receptacle (15) for an output drive.

8. Gear stage according to Claims 5 and 7, **characterised in that** at its narrowest point the receptacle (15) has a contact circle (17), the centre point (M) of which is the point of intersection of the axes (A₁₁, A₁₂).

9. Gear stage according to Claim 8, **characterised in that** a shaft is provided as the output drive, which shaft fits contiguously in the receptacle (15) and has a cross section corresponding to the contact circle (17).

10. Gear stage according to any one of the preceding Claims, **characterised in that** the drive (21) has a rolling eccentric which moves the oscillatory body (11) and is produced by a circulating rolling eccentric ball (25).

11. Gear stage according to any one of the preceding Claims, **characterised in that** the gear stage (1) is integrated with a motor (31) into the actuating drive (3).

12. Gear stage according to Claim 11, **characterised in that** the oscillatory body (11) bears rotor magnets (33) of the motor (31), while a stator (34) co-operating with the rotor magnets (33) is arranged on a housing (8) comprising the bearing (12).

13. Actuating drive (3) with a gear stage (1) according to any one of the preceding Claims.

14. Vehicle seat, in particular motor vehicle seat, with an actuating drive (3) according to Claim 13.

## Revendications

1. Etage d'entraînement d'un vérin, en particulier pour un siège de véhicule, avec un palier (12), lequel définit un axe (A₁₂), et un corps oscillant (11), monté sur le palier (12) et apte à tourner autour d'un autre axe (A₁₁), lequel corps oscillant, lors de la rotation d'un organe d'entraînement (21) provoque un mouvement de roulement sur le palier (12) autour de son axe (A₁₂), l'axe (A₁₁) du corps oscillant (11) étant incliné en oblique dans un angle (α) par rapport à l'axe (A₁₂) du palier (12), **caractérisé par le fait que** le corps oscillant (11) est en appui sur le palier (12) en deux points d'appui (B₁, B₂) diamétralement opposés.

2. Etage d'entraînement selon la revendication 1, **caractérisé par le fait que** le corps oscillant (11) et le palier (12) - tous deux au moins en coupe - sont réalisés de façon symétrique de cylindre avec des diamètres différents (d₁₁, d₁₂).

3. Etage d'entraînement selon la revendication 2, **caractérisé par le fait que** l'excentricité du palier du corps tournant (11) est petite vis-à-vis des diamètres (d₁₁, d₁₂) du corps oscillant (11) et du palier (12), en particulier s'élève au maximum à quelques pourcents de ceux-ci.

4. Etage d'entraînement selon l'une quelconque des revendications précédentes, **caractérisé par le fait que** le corps oscillant (11) et le palier (12) coopèrent comme entraînement à roue à friction ou au moyen d'une denture, qui présente une denture externe (41) et une denture interne (42), qui s'engrènent ensemble.

5. Etage d'entraînement selon l'une des revendications précédentes, **caractérisé par le fait que** les axes (A₁₁, A₁₂) se coupent en un point milieu (M).

6. Etage d'entraînement selon la revendication 5, **caractérisé par le fait que** le point milieu (M) est disposé au milieu entre les points d'appui (B₁, B₂).

7. Etage d'entraînement selon l'une quelconque des revendications précédentes, **caractérisé par le fait que** le corps oscillant (11) présente une cavité (15) en forme de sphère pour un arbre de sortie.

8. Etage d'entraînement selon les revendications 5 et 7, **caractérisé par le fait que** la cavité (15) présente, sur son emplacement le plus profond, une croix de contact (17), dont le point milieu (M) est le point d'intersection des axes (A₁₁, A₁₂).

9. Etage d'entraînement selon la revendication 8, **caractérisé par le fait que**, comme arbre de sortie, est prévu un arbre, qui se situe en appui dans la cavité (15) et présente une section transversale correspondant à la croix de contact (17).

10. Etage d'entraînement selon l'une des revendications précédentes, **caractérisé par le fait que** l'entraînement (21) présente un excentrique à rouleau déplaçant le corps oscillant (11), qui est obtenu par une bille d'excentrique à rouleau périphérique (25).

11. Etage d'entraînement selon l'une quelconque des revendications précédentes, **caractérisé par le fait que** l'étage d'entraînement est intégré avec un moteur (31) dans le vérin (3).

12. Etage d'entraînement selon la revendication 11, **caractérisé par le fait que** le corps oscillant (11) porte des aimants de rotor (33) du moteur (31), alors que sur un boîtier (8) présentant le palier (12), est disposé un stator (34) coopérant avec les aimants de rotor (33).

13. Vérin (3) comportant un étage d'entraînement (1) tel que défini à l'une des revendications précédentes.

14. Siège de véhicule, en particulier siège de véhicule automobile, comportant un vérin (3) tel que défini à la revendication 13.
